# EUROPEAN PATENT APPLICATION

(11) **EP 4 088 913 A1**
(43) Date of publication of application: **16.11.2022**
(21) Application number: 22164724.1
(22) Date of filing: 28.03.2022
(51) Int. Cl.: B29C 65/36, B29K 101/12

(54) **THERMOPLASTIC WELDING TOOLING**

(30) Priority: 11.05.2021 US 202163187364 P
(71) Applicant: The Boeing Company, Chicago, IL 60606-1596 (US)
(72) Inventor: MATLACK, Michael P., 60606-1596 Chicago (US); MONZYK, Mark A., 60606-1596 Chicago (US); BARTLETT, Katharine A., 60606-1596 Chicago (US); SAMALOT, Francis J., 60606-1596 Chicago (US)
(74) Representative: Morrall, Jonathan Ian McLachlan

(57) **Abstract**

A thermoplastic welding assembly includes a structural cage that supports a press and one or more hydraulic and pneumatic actuators. The press includes first and second plates that movable toward and away from each other to load and remove thermoplastic components to be held together for thermoplastic welding. Specifically, the first plate of the press includes non-conductive tooling inserts that are positioned to form a slot for a welding prove, and the second plates includes non-conductive tooling inserts that form cavities for plungers to move through. Plungers that are movable using the actuators are positioned in the cavities of the second plate, and compressible pressurizers are attached to the ends of the plungers. An operator uses electrical controls to move the plungers in the plunger cavities toward the thermoplastic components in the press to drive the pressurizers into the thermoplastic components and provide stabilizing pressure on the components during welding.

## Description

### BACKGROUND

Thermoplastic materials like polyethylene, polyvinyl chloride, nylons, polypropylene, acetals, and the like have become increasingly important as materials of products and machinery because of their moldability, ease of handling, light weight, and ability to withstand corrosion. Often, different thermoplastic materials are joined together for various applications, such as to make aerospace, automotive, mining, or other parts. Numerous techniques have been developed for the joining of thermoplastic materials, including welding and the use of adhesives. Thermoplastic welding is a type of welding for joining pieces of thermoplastic material using heating, pressure and cooling. To begin a thermoplastic weld, the surface of the thermoplastic material are heated to their melting point, or thermoplastic state. Each material has its own thermoplastic state, which usually ranges between 250°C (480°F) and 500°C (1022°F). The material is then pressed together until it cools. The pressure applied allows molecules in the material to newly position themselves, or to bond with molecules of another part.

One particular type of thermoplastic welding uses electromagnetic induction to heat components without contacting the components. An induction welding probe emits an inductive field toward two thermoplastic components to be joined, which induces heat in the components and allows them to weld together. Neither component is contacted by the induction coil itself, as only the electromagnetic field is necessary to induce the heat in the components. Induction welding requires that the components remain in contact with each other to induce heating, meld together, and then cool properly to form a strong thermoplastic weld. Conventional benches and presses used for thermoplastic welding may apply an incorrect pressure to the side of the components opposite the welding probe, which frequently results in welding errors like squeeze out or delamination issues. Or if some sort of bladder is used to push the components together during welding, bladder imprints are often found where the bladder rubbed off, or imprinted, on one of the components. Accordingly, conventional welding benches do not provide mechanisms for holding thermoplastic components together with the correct pressure from various angles or by materials that do not imprint during welding. There is, therefore, a desire for an improved thermoplastic welding assembly and thermoplastic welding method.

### SUMMARY

The disclosed examples are described in detail below with reference to the accompanying drawing figures listed below. The following summary is provided to illustrate examples or implementations disclosed herein. It is not meant, however, to limit all examples to any particular configuration or sequence of operations.

In one implementation, a thermoplastic welding assembly is provided for welding thermoplastic components. The thermoplastic welding assembly includes a first plate with various tooling inserts arranged to form a slot for a welding tool, and a second plate with additional tooling inserts arranged to form various plunger cavities. A heat sink is positioned within the slot of the first plate for dissipating heat from the thermoplastic components during welding. One or more plungers are positioned within the plunger cavities of the second plate and are movable toward the thermoplastic components being welded by pneumatic, hydraulic, mechanical, or electrical actuators. Pressurizers are affixed to the ends of the plungers for holding the thermoplastic components together during welding. In particular, the pressurizers are made of a deformable material that compresses when pushed into contact the thermoplastic components, providing a secure hold of the thermoplastic components during welding.

In another implementation, a thermoplastic welding assembly is provided for welding thermoplastic components. The thermoplastic welding assembly includes a welding probe, a press, and an outer structural shell. The press includes a first plate forming a slot for receiving the welding probe, a second plate with one or more plunger cavities, a heat sink positioned within the slot of the first plate, a plunger positioned within the plunger cavities of the second plate and movable toward the thermoplastic components, and a pressurizer affixed to the plunger for holding the thermoplastic components together during welding. In particular, the pressurizer is made of a deformable material that compresses when pushed into contact the thermoplastic components.

In another implementation, a thermoplastic welding assembly includes at least one first plate with a slot for receiving a welding probe capable of performing a thermoplastic weld and at least one second plate with plunger cavities. Multiple plungers are positioned within the plunger cavities and are selectively movable toward the first thermoplastic component. Multiple pressurizers are affixed to the plungers in the plunger cavities for using force supplied by the plungers, for holding the first thermoplastic component and the second thermoplastic component together for the thermoplastic weld. In particular, the pressurizers are made of a deformable material that compresses while in contact with the first thermoplastic component. Also, the first plate, second plate, plungers, and pressurizers are non-conductive.

Another implementation involves a method for welding thermoplastic components in a thermoplastic welding assembly. The thermoplastic welding assembly comprises a press that includes a first plate with a slot for a welding probe and a second plate having cavities for plungers to drive compressible pressurizers into contact with the thermoplastic components. The method includes receiving a signal to close the press on the thermoplastic components. In response to the signal, the press is closed to hold the thermoplastic components for welding. The plungers in the second plate are moved through the cavities to drive the compressible pressurizers into contact with the thermoplastic components and apply additional pressure for holding the thermoplastic components during welding. Welding is initiated with the welding probe, and the additional pressure is maintained on the thermoplastic components after the welding has stopped for a cooldown period. After the cooldown period, the compressible pressurizers are withdrawn from contact with the thermoplastic components, and the press is opened to enable removal of the thermoplastic components.

Still another implementation is directed to a method for welding thermoplastic components together. The method involves: driving compressible pressurizers into contact with the thermoplastic components to control pressure on the thermoplastic components during welding; actuating a welding probe to generate heat in the thermoplastic components to facilitate the welding; and applying a heat sink to the thermoplastic components to control the heat generated by the welding probe.

Other technical features may be readily apparent to one skilled in the art from the following figures, descriptions, and claims.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIG. 1 illustrates a perspective view of a welding configuration according to various implementations of the present disclosure.
FIG. 2 illustrates a side view of a thermoplastic welding assembly according to various implementations of the present disclosure.
FIG. 3 illustrates a side view of a thermoplastic welding assembly according to various implementations of the present disclosure.
FIG. 4 illustrates a perspective view of a thermoplastic welding assembly according to various implementations of the present disclosure.
FIG. 5 illustrates a side view of a thermoplastic welding assembly according to various implementations of the present disclosure.
FIG. 6 illustrates a side view of a thermoplastic welding assembly with electrical controls according to various implementations of the present disclosure.
FIG. 7 illustrates a flowchart diagram illustrating a workflow for welding thermoplastic components welding thermoplastic according to various implementations of the present disclosure.
FIG. 8 illustrates a schematic perspective view of an aircraft having one or more portions assembled by the thermoplastic welding systems and methods according to various implementations of the present disclosure.

Corresponding reference characters indicate corresponding parts throughout the accompanying drawings.

### DETAILED DESCRIPTION

The various examples will be described in detail with reference to the accompanying drawings. Wherever possible, the same reference numbers will be used throughout the drawings to refer to the same or like parts. References made throughout this disclosure relating to specific examples and implementations are provided solely for illustrative purposes but, unless indicated to the contrary, are not meant to limit all implementations.

The foregoing summary, as well as the following detailed description of certain implementations will be better understood when read in conjunction with the appended drawings. As used herein, an element or step recited in the singular and preceded by the word "a" or "an" should be understood as not necessarily excluding the plural of the elements or steps. Further, references to an implementation or an example are not intended to be interpreted as excluding the existence of additional examples that also incorporate the recited features. Moreover, unless explicitly stated to the contrary, examples "comprising" or "having" an element or a plurality of elements having a particular property could include additional elements not having that property.

Various thermoplastic welding assemblies are discussed herein that allow users to weld thermoplastic components together using induction welding. The thermoplastic components may be made of thermoplastics, such as Polyetherketoneketone (PEKK), polyaryletherketone (PAEK), or the like; laminate; composite, and any other material suitable for induction welding. The thermoplastic components discussed herein may be made of, partially or wholly, any such materials.

The thermoplastic welding assemblies discussed herein may be used as a bench for positioning two parts to be welded by a welding induction tool and applying appropriate pressure with particular non-inductive materials during the welding process to alleviate various welding irregularities that come from conventional welding benches. In particular, the disclosed thermoplastic welding assemblies use a number of pressurizers that are able to be moved into and out of contact with at least one of the thermoplastic components being welded. These pressurizers are made out of electrically non-inductive and deformable materials that compress when pushed into contact with the thermoplastic components. When in contact, the pressurizers hold the thermoplastic components in place for an induction welding probe to perform an induction weld and afterward in order for the then-welded thermoplastic components to cooldown and the weld to cure.

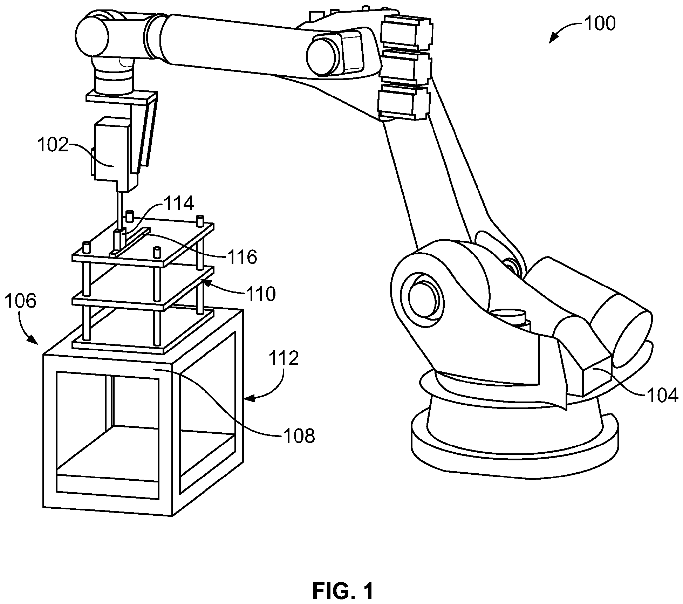

FIG. 1 illustrates a perspective view of a welding configuration 100 according to various implementations of the present disclosure. The example of the welding configuration 100 is for illustration only. Other implementations may be used without departing from the scope of the present disclosure. That is, the present disclosure contemplates induction welding configurations having different shapes, sizes, configurations, etc.

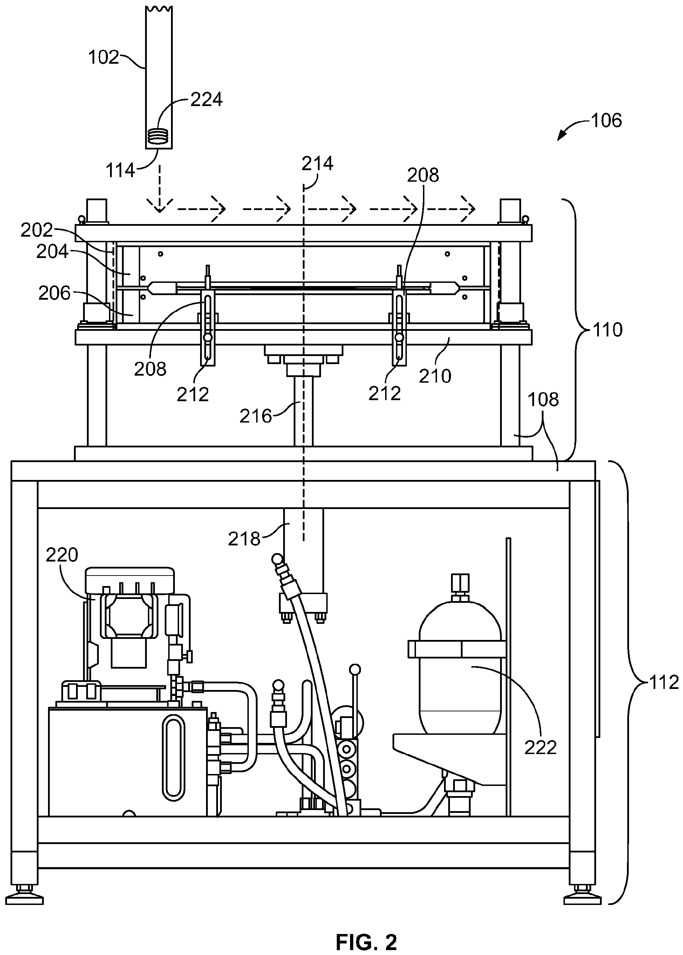

An induction welding tool 102 is mounted to a robotic arm 104 that moves the welding tool 102 into and out of a thermoplastic welding assembly 106. The thermoplastic welding assembly 106 includes an outer structural shell 108 to support the various parts discussed below. Outer structural shell 108 defines an upper cage 110 for a press and various pressurizers to hold the thermoplastic components being welded and a lower cage 112 to store various actuators for opening the press and moving the pressurizers into place. Only the outer structural shell 108 of the thermoplastic welding assembly 106 is shown in welding configuration 100 for clarity. The various internal components are depicted in subsequent FIGs. 2-6 and discussed in more detail below.

The robotic arm 104 operates to move and insert a welding probe 114 of the welding tool 102 into a slot 116 defined in the upper cage 110 and throughout the press housed therein. In some embodiments, the welding probe 114 includes an induction coil that may be selectively operated to inductively weld the thermoplastic components. In operation of such embodiments, thermoplastic components are held together in the press within the upper cage 110 using the assembly parts discussed below, and the welding probe 114 is inserted through the slot 116 and used to inductively weld the thermoplastic components together.

The welding configuration 100 of FIG. 1 is only one example. Alternative embodiments use different robotic arms 104 to control the welding tool 102, and others do not use a robotic arm 104 at all, relying instead on manual movement of the welding tool 102. Still other embodiments use a welding tool 102 that is supported by a robotic arm and also manually guided into and out of the slot 116. Numerous different configurations are fully contemplated by this disclosure.

FIG. 2 illustrates a side view of the thermoplastic welding assembly 106 for joining a first thermoplastic component to a second thermoplastic component using thermoplastic welding, according to various implementations of the present disclosure. Again, thermoplastic welding assembly 106 includes the outer structural shell 108 that defines the upper cage 110 112. The upper cage 110 houses and supports a press 202 that is made up of a first plate 204 and a second plate 206. Movable plate brackets 208 anchor the second plate 206 to a base plate 210 and are movable along bracket tracks 212 vertically along vertical axis 214.

For clarity, the majority of embodiments discussed herein refer to a vertical press 202 with the first plate 204 and the second plate 206. For clarity, the majority of embodiments discussed herein refer to a vertical press 202, where first plate 204 is an "upper" plate and second plate 206 is a "lower" plate.) Alternative embodiments use a horizontal press with parallel plates that are positioned horizontally next to each other and movable along a horizontal axis (not shown). Both configurations are fully contemplated: vertical presses 202 with first and second plates 204, 206 that move vertically and horizontal presses with side plates that move horizontally. To aid the reader, only vertical presses 202 are discussed, but embodiments may use any type of press, and the appended claims refer to presses that are formed with first and second plates 204, 206 to contemplate different configurations.

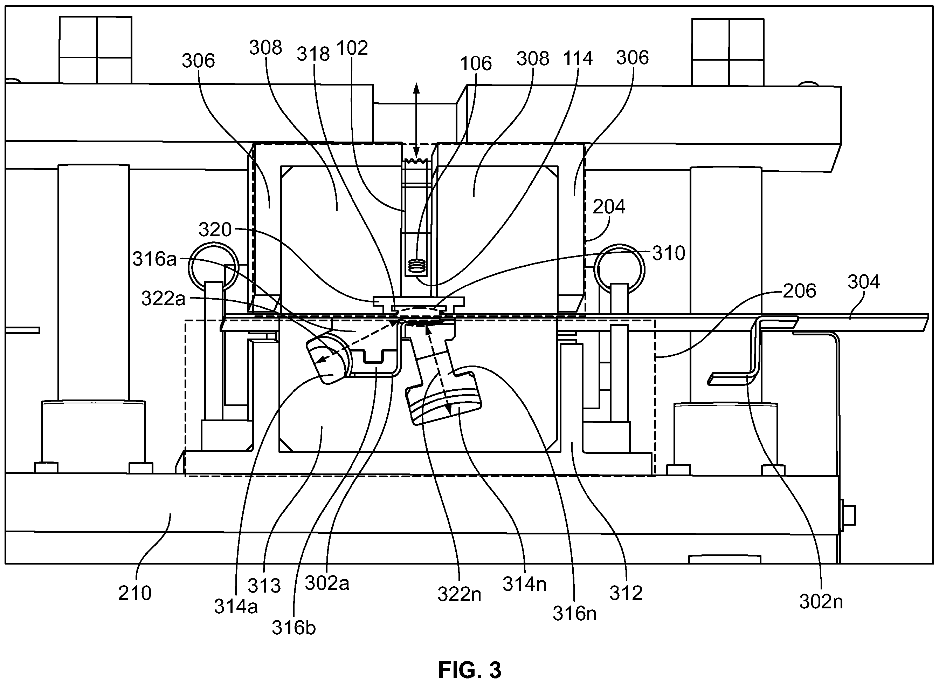

In some examples, the first plate 204 and the second plate 206 are made of a metal frame and include various non-conductive tooling inserts (discussed below). The non-conductive inserts may be formed of different types of non-conductive materials, such as for example but without limitation, plastics, rubbers, polyurethane, foam boards, polyurethane foam boards, woods, phenolic laminates, and the like. As shown in more detail in FIGs. 3-5 and discussed below, the first plate 204 and the second plate 206 may each include various modular tooling inserts comprising multiple different non-conductive inserts that fit particular contours and shapes of the thermoplastic components being welded. For example, the first plate 204 may be made up of two, three, four, or more non-conductive tooling inserts that fit together to define the slot 116 for the welding probe 114 of the welding tool 102. Additionally or alternatively, the tooling inserts of the second plate 206 may each be made up of two, three, four, or more non-conductive plates that fit together to define specific plunger cavities for the plungers and pressurizers discussed below.

It also should be noted that the metallic frames of the first plate 204 and the second plate 206 are strategically positioned at distances away from the targeted welding joints of the thermoplastic components so as not to interfere with inductive welding. In some examples, the metallic frames of one or both of the of the first plate 204 and the second plate 206 are located more than 100 millimeters (mm) away from the welding probe 114. Other distances are used in different alternative embodiments.

In some embodiments, the press 202 is a hydraulic press with a hydraulic actuated metallic frame. Alternative embodiments use a pneumatic, electrical, or other type of press 202. In operation, the press 202 may be opened to load thermoplastic components to be welded and closed to hold the thermoplastic components during and after the welding by moving the first plate 204 and/or the second plate 206 toward or away from each other along depicted vertical axis 214.

In some implementations, a press actuating arm 216 in the upper cage 110 opens and closes the press 202. The press actuating arm 216 moves in and out of a sleeve 218 and, in some embodiments, is driven by one or more actuators that are contained and supported in the lower cage 112.

A press actuator 220, which may be an electric, mechanical, hydraulic, or pneumatic motor provides the motive force for moving the press actuating arm 216 up or down along the vertical axis 214. Other embodiments move the press actuating arm 216 in different directions to open and close the press 202. Some embodiments vertically move the first plate 204 while keeping the second plate 206 stationary. Other embodiments vertically move the second plate 206 while keeping the first plate 204 stationary. Still other embodiments vertically move the both the first plate 204 and the second plate 206.

Additionally, a plunger actuator 222 is housed and supported in the lower cage 112. The plunger actuator 222 may be an electric, mechanical, hydraulic, or pneumatic motor that moves the plungers and pressurizes discussed below and shown in FIGs. 3-5. In this manner, the plunger actuator 222 is configured to supply the force (e.g., electric, mechanical, pneumatic, hydraulic, etc.) to move the disclosed plungers referenced below. In some embodiments, the plunger actuator 222 is configured to supply mechanical force to move the pressurizers-through driving the plungers 316a-n-into contact with the thermoplastic components.

Once the press 202 is loaded with the thermoplastic components to be welded, the welding tool 102 is inserted through the slot 116 to perform the thermoplastic welding, first downward through the slot 116 and then horizontally along the thermoplastic components-as indicated by the dotted arrows. In some embodiments, the welding tool 102 includes an induction coil 224 in the welding probe 114.

The induction coil 224 is operable to perform the thermoplastic weld through induction welding, electromagnetically heating the thermoplastic material of the thermoplastic components to thereby fusing the two thermoplastic components together. For example, the induction coil 224 may provide a voltage at a specified frequency, such as between 10 kHz and 1 MHz, to inductively weld the thermoplastic components together.

In one example, the two thermoplastic components are inductively heated at a weld interface between the two components to form a single aggregate component. For example, a skin may be welded to a stringer or a rib, two plastic skins may be collectively welded together to form an airplane part, automotive part, motorcycle part, or the like; a foil may be welded to a plastic container; and myriad other uses exist and are fully contemplated. For instance, the airplane part may be a part of wing, or the automobile part may be a leather seat. Thus, the thermoplastic components may be welded to collectively form an airplane part, an automotive part, a boat part, or the like.

FIG. 3 illustrates a side view of the thermoplastic welding assembly 106 according to various implementations of the present disclosure. This side view illustrates thermoplastic components 302a-n (shown as separate stringers) being welded to a separate thermoplastic component 304 (shown as a skin) through thermoplastic welding. The thermoplastic components 302a-n and the thermoplastic component 304 may be any type of thermoplastic components. The depicted embodiment shows several thermoplastic components 302a-n as separate stringers that are being welded to thermoplastic component 304, which is a skin. Other thermoplastic components 302, 304 besides stringers and skins are fully contemplated as well. The thermoplastic welding assembly 106 may be opened or disassembled so that a thermoplastic component 302 may be situated between the first plate 204 and the second plate 206, held in place, and welded by the welding tool 102. As shown, the welding tool 102 is insertable into and out of the slot 116 for the induction coil 224 to perform induction welding. In some embodiments, the first plate 204 includes an upper outer press shell 306 that, at least partially, houses one or more upper tooling inserts 308. In some embodiments, upper tooling inserts 308 are modular, removable, and made of non-conductive material so as not to interfere with the thermoplastic welding performed by the welding tool 102. Thus, the first plate 204 is non-conductive at a welding joint 310 where the thermoplastic component 302a and the thermoplastic component 304 are joined together. As such, the first plate 204 is referred to herein as "non-conductive" because its side that holds the thermoplastic components 302-304 in place are made of non-conductive materials. In alternative embodiments, the upper tooling inserts 308 are fixed in the first plate 204, and not able to be removed.

Similarly, the second plate 206 includes a lower outer press shell 312 that, at least partially, houses one or more lower tooling inserts 313. In some embodiments, lower tooling inserts 313 are modular, removable, and made of non-conductive material so as not to interfere with the thermoplastic welding performed by the welding tool 102. Thus, the second plate 206 is non-conductive at a welding joint where the thermoplastic component 302a and thermoplastic component 304 are joined together. As such, the second plate 206 is referred to herein as non-conductive because its exposed side that holds the thermoplastic components 302-304 in place are made of non-conductive materials. In alternative embodiments, the lower tooling inserts 313 are fixed in the first plate 204, and not able to be removed.

The first plate 204 defines the slot 116 for the welding tool 102. In particular, the upper outer press shell 306 and the upper tooling inserts 308 define an opening for the slot 116.

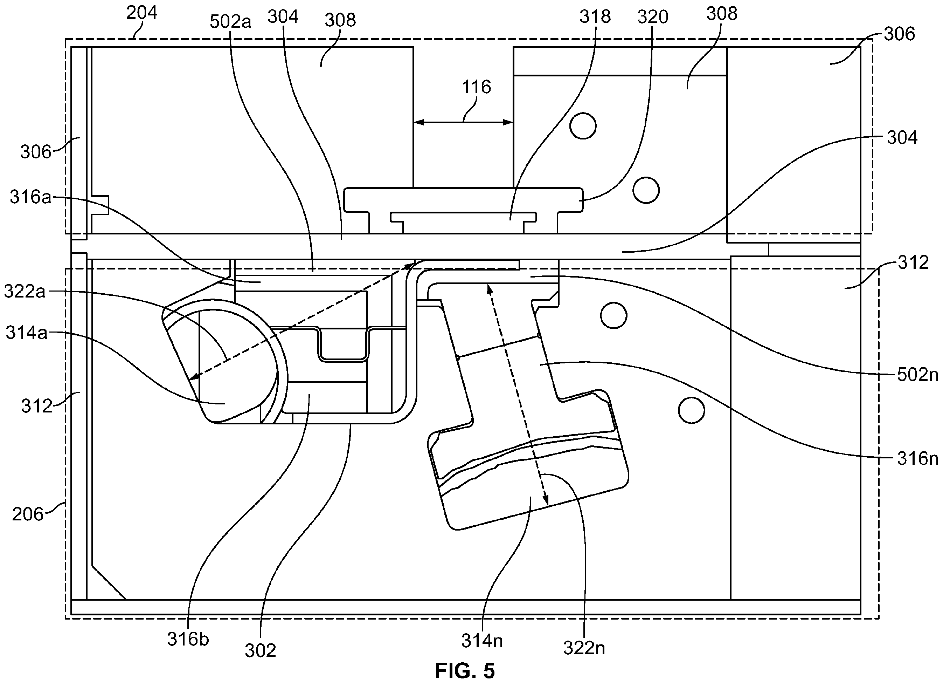

On the other end, the second plate 206 defines plunger cavities 314a-n. Plunger cavities 314an are recesses for different plungers 316a-n, providing pathways to move toward and away from the thermoplastic components 302, 304 (in the depicted case, a first stringer and a skin), as along the depicted plunger axes 322a-n. As shown in more detail in FIG. 5, pressurizers are affixed to the ends of the plungers 316a-n that transfer force from the plungers 316a-n to the thermoplastic components 302 and 304. In particular, plungers 316a and 316b interlock with each other within plunger cavity 314a and function as a single plunger 316. Plunger 316n is positioned within plunger cavity 314n. Each of the plungers 316a-n may be single plungers or made up of separate plungers, or separate plunger parts, that are assembled together to form a plunger 316.

The plunger cavities 314a-n also receive pneumatic hoses, hydraulic hoses, mechanical rods, or other conveyances to the plungers 316a-n, to move the plungers 316a-n toward and hold the thermoplastic components 302 and 304. Alternatively, mechanical actuators may be used. In other words, pneumatic, hydraulic, mechanical, or electrical actuators situated in the lower cage 112 of the thermoplastic welding assembly 106 move the plungers 316a-n into contact with the thermoplastic components 302 and 304 and hold the thermoplastic components 302 and 304 against the first plate 204-for welding to be efficiently completed.

A heat sink 318 is positioned within the slot 116 over top of one the uppermost thermoplastic component 304, on the side where the welding tool 102 is to be inserted. The heat sink 318 dissipates heat of the thermoplastic component during welding. In some embodiments, the heat sink 318 spans the entire width of the welding joint 310 to ensure that heat is dissipated where the thermoplastic components fuse. In some embodiments, the heat sink 318 is shaped wider than the welding joint 310 created by said welding. In other words, the heat sink is shaped wider than a width of the portion of the smaller thermoplastic part 302 (e.g., the depicted stringer) that is being joined to the larger thermoplastic part (e.g., the depicted skin). The heat sink 318 being wider than the welding joint 310 helps spread heat more evenly over the surface of the welding joint 310.

A heat sink cover 320 caps the heat sink 318, but is not used in all embodiments. Moreover, the heat sink 318 and heat sink 318 fit within the upper tooling inserts 308. The heat sink 318 absorbs and disperses heat from the surface of at least one of the thermoplastic components 302, 304 on which it is in contact as the two thermoplastic components 302, 304 are induction welded. This ensures that heat generated within the two thermoplastic components 302, 304 at the welding joint 310 does not cause the surface contacted by the heat sink 318 to exceed a transition temperature, preventing squeeze out and other irregularities from conventional welding benches.

In operation, the first plate 204 and the second plate 206 of the press 202 are opened to load the thermoplastic component 302a and the thermoplastic component 304. The heat sink 318 is positioned over the thermoplastic component 304, and the press 202 is closed, providing downward pressure to hold the thermoplastic component 302a and the thermoplastic component 304. Upward pressure is then supplied to hold the thermoplastic component 302a and the thermoplastic component 304 together by moving the plungers 316a-n toward the thermoplastic components so that pressurizers on the plungers 316a-n can hold the thermoplastic component 302a and the thermoplastic component 304 together. Examples of the pressurizers are shown in FIG. 5 and discussed in more detail below.

In some embodiments, the pressurizers and plungers 316a-n are made of non-conductive materials. The plungers 316a-n are fashioned from rigid materials and/or non-deformable materials in some embodiments, and the pressurizers are made of deformable materials that compress when pushed into the thermoplastic components 302, 304, which may, in some examples, be a first stringer and a skin). Using compressible pressurizers enables more pressure to be applied to the thermoplastic components during thermoplastic welding while alleviating squeeze out, delamination, and bladder imprint effects from conventional assemblies. Example materials for the plungers include, without limitation, plastics, rubbers, polyurethane, foam boards, polyurethane foam boards, woods, phenolic laminates, and the like. Example materials for the pressurizers include, without limitation, rubbers, RTV silicone, and the like. Additionally or alternatively, the plungers 316a-n and/or the pressurizers are, in some embodiments, made of a phenolic-based temperature-resistant material.

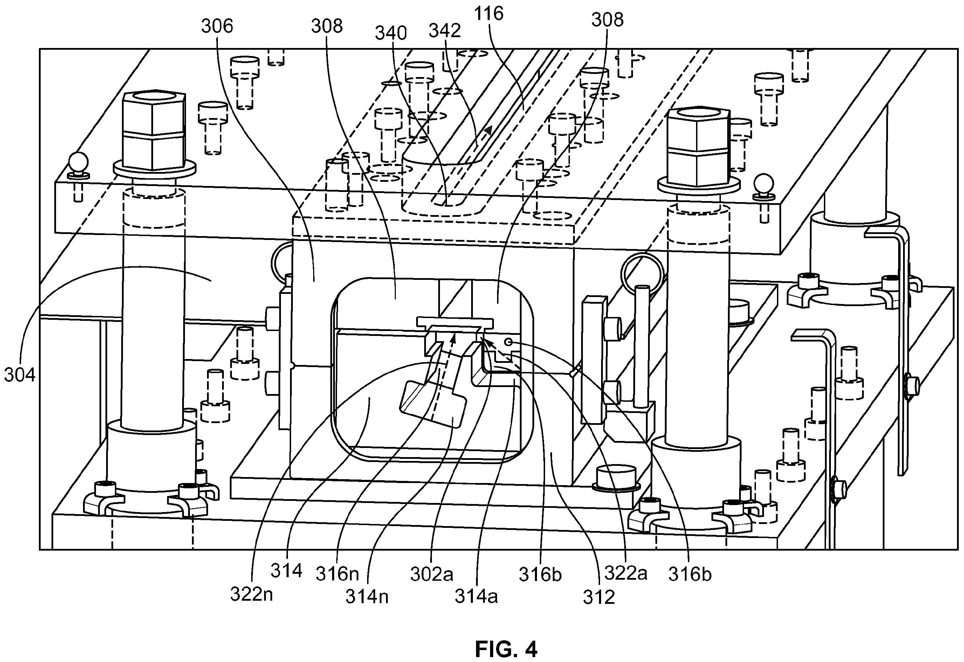

FIG. 4 illustrates a perspective view of the thermoplastic welding assembly 106 according to various implementations of the present disclosure. This perspective view illustrates the same configuration shown in FIG. 3, only of a three-dimensional perspective and from the opposite side shown in FIG. 3. The parts previously discussed in FIG. 3 are labeled again in FIG. 4 to illustrate the particular embodiment shown.

The depicted example shows thermoplastic component 302a held against thermoplastic component 304 for thermoplastic welding. Specifically, the non-conductive first plate 204 provides downward pressure on the thermoplastic component 304 to hold it against the thermoplastic component 302a so that the two may be welded together. The plungers 316a,b and 316n have been moved into contact with the thermoplastic component 302a in the directions shown along the plunger axes 322a-n. As depicted, plunger 316b has been moved by actuators diagonally up and into the thermoplastic component 302a, and combined plunger 316a,b has been moved diagonally up and into a different side of the thermoplastic component 302a. The plungers 316a-n may be driven in x, y, and z direction. Each of the plungers 316an has a pressurizer (shown in more detail in FIG. 5) made of deformable material that compresses when pushed into contact with the thermostatic components 302, 304 being welded.

Once the two thermoplastic components are secured in place by the first plate 204, the second plate 206, and the pressurizers attached to the plungers 316, the welding tool 102 may be inserted into the slot 116, down to or just above the heat sink cover 320, and the welding may commence. As welding is performed, the welding tool 102 is moved along the slot 116 from one slot end 340 to another slot end (not shown), as referenced by arrow 342. Once welding tool 102 is removed, clamping of the thermoplastic components is held in place for a certain cooldown period. In some embodiments, the cooldown period is preset based on the type of parts being welded, such parts of particular materials, shapes, or the like. Alternatively, the cooldown period may be manually set by an operator, or user, of the thermoplastic welding assembly 106. For instance, the operator may wait a certain amount of time before removing the welded thermoplastic components.

After welding and cooldown, the plungers 316a-n are retracted away from the welded thermoplastic components, diagonally down, in the depicted example. The press 202 may also be opened, and an operator may then remove the joined thermoplastic component 302a and thermoplastic component 304.

FIG. 5 illustrates a side view of the thermoplastic welding assembly 106 according to various implementations of the present disclosure. The depicted side view illustrates the same configuration shown in FIGs. 2-4, specifically showing the contents of the first plate 204 and the second plate 206 being in contact with the two thermoplastic components being welded: the thermoplastic component 302 and the thermoplastic component 304. Again, the first plate 204 includes the outer press shell 306 and the non-conductive upper tooling inserts 308 that define the slot 116 for the welding tool 102. The heat sink 318 is positioned over top of one of the thermoplastic component 304, and a heat sink cover 320 provides caps the heat sink 318. Underneath, the second plate 206 includes one or more lower tooling inserts 313 that define one or more plunger cavities 314a-n. Plungers 316a-n fit are positioned within the plunger cavities 314a-n and are movable toward the thermoplastic components along plunger axes 322a-n.

Deformable pressurizers 502a-n are affixed to the plungers 316a-n, respectively. In some embodiments, the pressurizers are reciprocally shaped to shape to outer contours of the thermoplastic components being welded. This is shown by the pressurizers 502a-n fitting within the shaped z-shaped thermoplastic component 302 being welded. The pressurizers 502a-n may be shaped to fit flush against different parts. As mentioned above, the pressurizers 502a-n are, in some embodiments, modular and may be stacked together or otherwise oriented in the plunger cavities 314a-n to conform to the contours of the thermoplastic components. The plungers 316a-n are actuated and driven toward and away from the thermoplastic components being welded. This, in turn, pushes the pressurizers 502a-n into and out of contact with the thermoplastic components being welded, which, in the depicted example, are shown as thermoplastic component 302, 304, compressing the pressurizers 502a-n when in contact and decompressing the pressurizers 502a-n when disengaged. When in contact, forces applied to the plungers 316a-n are transferred through the pressurizers 502a-n to the thermoplastic components, effectively holding the thermoplastic components to facilitate the thermoplastic welding. Thus, the pressurizers 502a-n use force supplied by the plungers 316a-n for holding the first thermoplastic component 302 and the second thermoplastic component 304 together for a thermoplastic weld.

Additionally, in some embodiments, the pressurizers 502a-n are configurable to accommodate variable sizes of the thermoplastic components 302, 304. In such embodiments, the pressurizers 502a-n are modular and may be stacked together or otherwise oriented in the plunger cavities 314a-n to conform to the contours of the thermoplastic components.

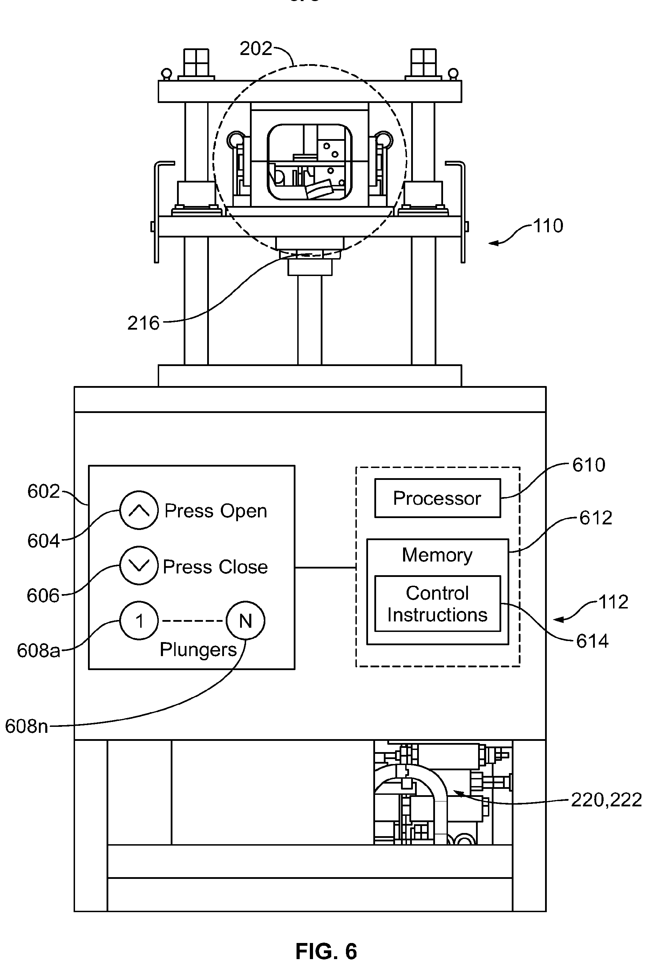

FIG. 6 illustrates a side view of the thermoplastic welding assembly 106 with electrical controls 602 according to various implementations of the present disclosure. In some implementations and examples, the thermoplastic welding assembly 106 includes electrical controls 602 that allow an operator to control the press 202 and the bladders using press actuator 220 and the plunger actuator 222 located in the lower cage 112. In some examples, the electrical controls 602 include various buttons 604, 606, 608a, and 608n. Press buttons 604 and 606 open and close direct the press actuator 220 to move the press actuating arm 216 for opening and closing the press 202. Plunger buttons 608a-n move direct the plunger actuator 222 to move the plungers 316a-n in the plunger cavities 314a-n toward or away from the thermoplastic components being welded. Additional and alternative buttons are provided in different configurations of the electrical controls 602. Thus, the disclosed electrical controls 602 all for selectively activating the plunger actuator 222 and controlling movement of the plungers 316a-n for moving the plungers 316a-n in the second plate 206 through the plunger cavities 314a-n to drive the compressible pressurizers 502a-n into contact with the thermoplastic components 302, 304 and apply additional pressure for holding the thermoplastic components 302, 304 during welding.

In some embodiments, the thermoplastic welding assembly 106 includes a processor 610 and computer-storage memory (memory) 612. Software and/or firmware control instructions 614 are stored in the memory 612 and executable by the processor 610 to move the press 202 and plungers 316a-n based on the different buttons 604-608n being engaged. In this vein, the control instructions 614 selectively activate the press actuator 220 and the plunger actuator 222 depending on the buttons pushed. For instance, the control instructions 614 include executable code to detect that button 602 is pushed and consequently activate the press actuator 220 to open the press 202 by moving the first plate 204 and/or the second plate 206 away from each other. The control instructions 614 include executable code to close the press 202 when button 606 is pushed and move the plungers 316a-n toward and away from thermoplastic components when the buttons 608a-n are pushed.

Processor 610 may include any quantity of central processing units (CPUs), electrical controllers, microcontrollers, application-specific integrated circuits (ASICs), systems on chip (SoC), or other processing units configured to execute the control instructions 614 and/or some or all of the operations in the flow charts discussed below and depicted in the accompanying figures. Moreover, in some examples, the processors 610 represents an implementation of analog techniques to perform the control instructions 614 and operations described herein. Memory 612 may take the form of the computer-storage memory device referenced below and operatively provide storage of computer-readable instructions, data structures, program modules and other data for the thermoplastic welding assembly 106. Aside from the code instructions 614, memory 612 stores one or more of an operating system (OS), a universal application platform, or other program modules and program data. Memory 612 is thus able to store and access data that are executable by processor 610 and configured to carry out the various operations disclosed herein. In some examples, memory 612 stores executable computer instructions for an OS and various software applications. The OS may be any OS designed to the control the functionality of the thermoplastic welding assembly 106, including, for example but without limitation: WINDOWS^{®} developed by the MICROSOFT CORPORATION^{®}, MAC OS^{®} developed by APPLE, INC.^{®} of Cupertino, Calif., ANDROID^{™} developed by GOOGLE, INC.^{®} of Mountain View, California, open-source LINUX^{®}, and the like.

By way of example and not limitation, computer-readable media, as referenced herein, comprise computer-storage memory devices and communication media. Computer-storage memory devices may include volatile, nonvolatile, removable, non-removable, or other memory implemented in any method or technology for storage of information such as computer-readable instructions, data structures, program modules, or the like. Computer-storage memory devices are tangible and mutually exclusive to communication media. Computer-storage memory devices are implemented in hardware and exclude carrier waves and propagated signals. Computer-storage memory devices for purposes of this disclosure are not signals per se. Example computer-storage memory devices include hard disks, flash drives, solid state memory, phase change random-access memory (PRAM), static random-access memory (SRAM), dynamic random-access memory (DRAM), other types of random-access memory (RAM), read-only memory (ROM), electrically erasable programmable read-only memory (EEPROM), flash memory or other memory technology, compact disk read-only memory (CD-ROM), digital versatile disks (DVD) or other optical storage, magnetic cassettes, magnetic tape, magnetic disk storage or other magnetic storage devices, or any other non-transmission medium that may be used to store information for access by a computing device. In contrast, communication media typically embody computer readable instructions, data structures, program modules, or the like in a modulated data signal such as a carrier wave or other transport mechanism and include any information delivery media.

The computer-executable code instructions 614 may be organized into one or more computer-executable components or modules stored in memory 612. Generally, program modules include, but are not limited to, routines, programs, objects, components, and data structures that perform particular tasks or implement particular abstract data types. Aspects of the disclosure may be implemented with any number an organization of such components or modules. For example, aspects of the disclosure are not limited to the specific computer-executable instructions or the specific components or modules illustrated in the figures and described herein. Other examples of the disclosure may include different computer-executable instructions or components having more or less functionality than illustrated and described herein. In examples involving a general-purpose computer, aspects of the disclosure transform the general-purpose computer into a special-purpose computing device, CPU, electrical controller, microcontroller, ASIC, SoC, or other processing unit for specifically controlling and operating the press 202 and plungers 316a-n of the thermoplastic welding assembly 106. As will be appreciated, any suitable program code instructions may be loaded onto the memory 612 to produce a particular machine, such that the particular machine becomes a means for implementing the functions specified herein. These control instructions 614, when loaded into memory 612 for execution by the processor 610, create the specific electrically controlled thermoplastic welding assembly 106 described herein. In other words, embodiments having processor 610 and the memory 612 executing and storing the control instructions 614 constitute a specific processing device that for controlling thermoplastic welding in the particular thermoplastic welding assemblies 106 described herein.

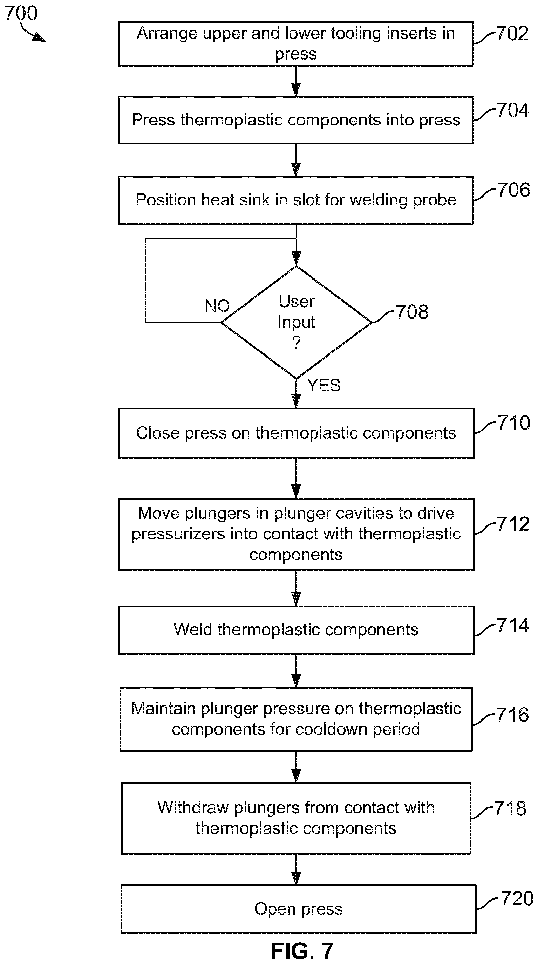

FIG. 7 illustrates a flowchart diagram illustrating an operational workflow 700 to control pressure and heat on the thermoplastic components 302, 304 during thermoplastic welding, according to various implementations of the present disclosure. Workflow 700 may be implemented by the thermoplastic welding assembly 106 equipped with the previously discussed press 202 that includes the first plate 204 with slot 116 for the welding probe 114 and the second plate 206 having plunger cavities 314a-n for plungers 316a-n to drive the compressible pressurizers 502a-n into contact with the thermoplastic components. Various implementations of the workflow 700 may be performed without departing from the scope of the present disclosure.

Initially, the first and second plates 204, 206 are formed by inserting the upper and lower tooling inserts 308, 313, respectively, as shown at step 702. These tooling inserts 308, 313 are positioned in the first and second plates 204, 206 to form the previously discussed plunger cavities 314a-n and the slot for the welding probe 114. The operator may then position the thermoplastic components 302, 304 to be welded in the press 202, as shown at 704. The heat sink 318 positioned on top of the thermoplastic components 302, 304 in the defined slot 116 for the welding probe 114, as shown at 706.

The code instructions 614 wait for a signal (e.g., user input or sensor input) to actuate the press 202 and plungers 316a-n, as shown at 708. In response to the signal to close the press 202, the press 202 is accordingly closed, as shown at 710. The plungers 316a-n are also moved through the plunger cavities 314a-n to drive the compressible pressurizers 502a-n into contact with the thermoplastic components 302, 304, as show at 712 applying additional pressure for holding the thermoplastic components 302, 304 during welding. In this manner, the plungers 316a-n are movable to drive the compressible pressurizers 502a-n into contact with the thermoplastic components 302, 304.

With the thermoplastic components 302, 304 being held, the welding is initiated and performed by the welding tool 102, as shown at 714. As welding is performed, the welding tool 102 is moved along the slot 116 from one slot end 340 to another (not shown, but indicated through arrow 342). After welding is complete, the thermoplastic components 302, 304 are held through maintaining the pressure of the plungers 316a-n on the thermoplastic components 302, 304 for a cooldown period to allow the thermoplastic weld to cure, as shown at 716. The cooldown period may be set based on the type of thermoplastic components 302, 304 or materials being welded. After the cooldown period, the plungers may be withdrawn from contact with the thermoplastic components302, 304 , as shown at 718. And the press may be opened 720 for removal of the welded thermoplastic components 302, 304, as shown at 720. Although described herein as a series of steps, additional steps can be performed, steps can be removed, or steps can be performed in a different order without departing from the scope of the present disclosure. The order of execution or performance of the operations in examples of the disclosure illustrated and described herein is not essential, and may be performed in different sequential manners in various examples. For example, it is contemplated that executing or performing a particular operation before, contemporaneously with, or after another operation is within the scope of aspects of the disclosure.

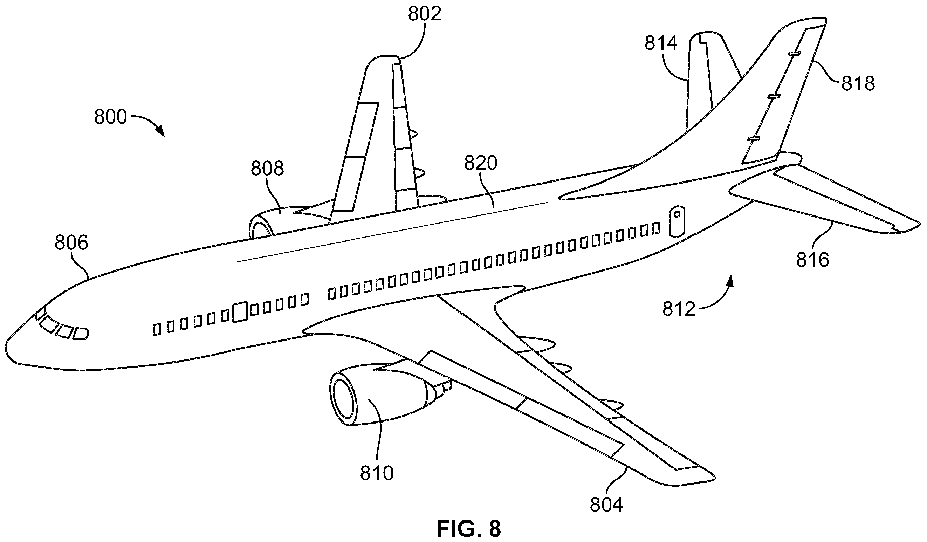

FIG. 8 illustrates a schematic perspective view of an aircraft having one or more portions assembled by the thermoplastic welding systems and methods according to various implementations of the present disclosure. One or more examples allow for fabrication of thermoplastic aircraft parts for an aircraft 800 as illustrated in FIG. 8. The aircraft 800 includes a wing 802 and a wing 804 attached to a body 806. The aircraft 800 also includes an engine 808 attached to the wing 802 and an engine 810 attached to the wing 804. The body 806 has a tail section 812 with a horizontal stabilizer 814, a horizontal stabilizer 816, and a vertical stabilizer 818 attached to the tail section 812 of the body 806. The body 806 in some examples has a composite skin 820.

The aircraft 800 is an example of an aircraft in which welded thermoplastic structures can be implemented in accordance with various examples described herein. In one particular example as described in more detail herein, a composite bracket and blade stringer of the aircraft 800 is a welded thermoplastic structure formed according to the present disclosure. In other examples, a structural support such as a spar, rib, or other structural support of the wing 802, the wing 804, or the body 806 welded to another component comprises a thermoplastic structure. For example, a structural support of the body 806 welded to the composite skin 820 can comprise a welded thermoplastic structure.

In some examples, the present disclosure allows induction welding of different geometries or configurations of parts with magnetic flux from the induction coil 224 applied to only one side of the thermoplastic components to be welded. For example, the induction coil 224 allows for induction welding from one side while effectively spreading heat and pressure as described herein. For example, some or all aspects of the present disclosure can be implemented at least on the wing 804, the body 806, and/or the composite skin 820 described herein.

The illustration of the aircraft 800 is not meant to imply physical or architectural limitations to the manner in which an illustrative configurations can be implemented. For example, although the aircraft 800 is a commercial aircraft, the aircraft 800 can be a military aircraft, a rotorcraft, a helicopter, an unmanned aerial vehicle, or any other suitable aircraft. Other vehicles are possible as well, such as, for example but without limitation, an automobile, a motorcycle, a bus, a boat, a train, or the like.

Thus, various examples facilitate induction welding of parts by improving the heating of (e.g., more uniformly heat) the weld interface between the parts from a single side of the parts. The present disclosure, including the examples described herein, can be implemented using different manufacturing environments. For example, some or all aspects of the present disclosure can be implemented at least in the material procurement and component and assembly manufacturing, as described herein.

The following clauses describe further aspects of the present disclosure. In some implementations, the clauses described below can be further combined in any sub-combination without departing from the scope of the present disclosure.
Clause Set A:
   A1: A thermoplastic welding assembly for welding thermoplastic components, comprising:
      a first plate forming a slot;
      a second plate with one or more plunger cavities;
      a heat sink positioned within the slot of the first plate,
      at least one plunger positioned within the one or more plunger cavities of the second plate and movable toward the thermoplastic components being welded, and
      at least one pressurizer affixed to the at least one plunger for holding the thermoplastic components together during welding, wherein the at least one pressurizer is made of a deformable material that compresses when pushed into contact the thermoplastic components.
   A2: The thermoplastic welding assembly of clause A1, wherein the at least one plunger comprises two or more plungers.
   A3. The thermoplastic welding assembly of clause A1 or clause A2, wherein the at least one pressurizer comprises two or more pressurizers.
   A4. The thermoplastic welding assembly of any of clauses A1 to A3, wherein the at least one pressurizer is reciprocally shaped to an outer contour of at least one of the thermoplastic components.
   A5. The thermoplastic welding assembly of any of clauses A1 to A4, further comprising: at least one bladder configured to move the at least one plunger through pneumatic force to drive the at least one pressurizer into contact with at least one of the thermoplastic components; and
      a plunger actuator configured to supply the pneumatic force to move the at least one plunger. A6. The thermoplastic welding assembly of any of clauses A1 to A5, further comprising a hydraulic actuated metallic frame.
   A7. The thermoplastic welding assembly of clause A5 or clause A6, further comprising one or more electrical controls for selectively activating the plunger actuator and control movement of the at least one plunger to drive the at least one pressurizer into contact with said at least one of the thermoplastic components.
   A8. The thermoplastic welding assembly of any of clauses A1 to A7, further comprising a plunger actuator configured to supply mechanical force to move the at least one pressurizer into contact with at least one of the thermoplastic components.
   A9. The thermoplastic welding assembly of any of clauses A1 to A8, further comprising: a welding probe,
      wherein the heat sink is shaped wider than the welding probe.
   A10: The thermoplastic welding assembly of any of clauses A1 to A9, further comprising: a welding probe,
      wherein the heat sink is positioned between the thermoplastic components and a welding probe.
   A11: The thermoplastic welding assembly of any of clauses A1-A10, wherein the first plate comprises a plurality of first tooling inserts that are removable from the structural box.
   A12: The thermoplastic welding assembly of any of clauses A1-A11, wherein the second plate comprises a plurality of lower tooling inserts that are removable from the structural box. A13: The thermoplastic welding assembly of any of clauses A1-A12, wherein the at least one plunger comprises two or more plungers located in separate of the one or more plunger cavities.
   A14: The thermoplastic welding assembly of any of clauses A1 to A13, wherein one of the at least one plunger comprises separate plunger parts that are assembled together to fit within the one or more plunger cavities.
   A15: The thermoplastic welding assembly of any of clauses A1 to A14, wherein the thermoplastic components comprise a stringer and a skin.
   A16: The thermoplastic welding assembly of any of clauses A1 to A15, wherein the thermoplastic components form an airplane part, an automobile part, a boat part, or a motorcycle part.
   A17: The thermoplastic welding assembly of any of clauses A1 to A16, wherein the at least one pressurizer is configurable to accommodate variable sizes of the thermoplastic components.
Clause Set B:
   B1: A thermoplastic welding assembly for welding thermoplastic components, comprising: a welding probe;
      a press comprising:
      a first plate forming a slot for receiving the welding probe, and
      a second plate with one or more plunger cavities; and
   an outer structural shell comprising:
      an outer case,
      a heat sink positioned within the slot of the first plate,
      at least one plunger positioned within the one or more plunger cavities of the second plate and movable toward the thermoplastic components, and
      at least one pressurizer affixed to the at least one plunger for holding the thermoplastic components together during welding, wherein the at least one pressurizer is made of a deformable material that compresses when pushed into contact the thermoplastic components.
   B2: The thermoplastic welding assembly of clause B1, wherein the at least one plunger comprises two or more plungers.
   B3: The thermoplastic welding assembly of any of clauses B1 and B2, wherein the at least one pressurizer comprises two or more pressurizers.
   B4: The thermoplastic welding assembly of clause of any of clauses B1 to B3, wherein the at least one pressurizer is reciprocally shaped to an outer contour of at least one of the thermoplastic components.
   B5: The thermoplastic welding assembly of any of clauses B1 to B4, further comprising:
      at least one bladder configured to move the at least one plunger through pneumatic force to drive the at least one pressurizer into contact with the thermoplastic components; and
      a plunger actuator configured to supply the pneumatic force to move the at least one plunger.
   B6: The thermoplastic welding assembly of any of clauses B1 to B5, wherein the press is a hydraulic press.
   B7: The thermoplastic welding assembly of clause B6, further comprising one or more electrical controls for selectively activating the plunger actuator and control movement of the at least one plunger to drive the at least one pressurizer into contact with the thermoplastic components.
   B8: The thermoplastic welding assembly of any of clauses B1 to B7, further comprising a plunger actuator configured to supply mechanical force to move the at least one pressurizer into contact with the thermoplastic components.
   B9: The thermoplastic welding assembly of any of clauses B1 to B8, wherein the heat sink is shaped wider than a welding joint created by said welding.
   B9: The thermoplastic welding assembly of any of clauses B1 to B9, wherein the heat sink is positioned between the thermoplastic components and the welding probe.
   B10: The thermoplastic welding assembly of any of clauses B1 to B10, wherein the first plate comprises a plurality of tooling inserts that are removable from the structural box.
   B11: The thermoplastic welding assembly of any of clauses B1 to B11, wherein the second plate comprises a plurality of tooling inserts that are removable from the structural box. B12: The thermoplastic welding assembly of any of clauses B1 to B12, wherein the at least one plunger comprises two or more plungers located in separate of the one or more plunger cavities.
   B13: The thermoplastic welding assembly of any of clauses B1 to B13, wherein one of the at least one plunger comprises separate plunger parts that are assembled together to fit within the one or more plunger cavities.
   B14: The thermoplastic welding assembly of any of clauses B1 to B14, wherein the thermoplastic components comprise a stringer and a skin.
   B15: The thermoplastic welding assembly of clause B14, wherein the thermoplastic components form an airplane part.
   B16: The thermoplastic welding assembly of clause B16, wherein the thermoplastic components form an automobile part, a boat part, or a motorcycle part.
Clause set C:
   C1: A thermoplastic welding assembly for joining a first thermoplastic component to a second thermoplastic component using thermoplastic welding, comprising:
      at least one first plate with a slot for receiving a welding probe capable of performing a thermoplastic weld;
      at least one second plate with plunger cavities;
      two or more plungers positioned within the plunger cavities, the two or more plungers being selectively movable toward the first thermoplastic component; and
      two or more pressurizers affixed to the two or more plungers in the plunger cavities for using force supplied by the two or more plungers to hold the first thermoplastic component and the second thermoplastic component together for the thermoplastic weld, wherein the two or more pressurizers is made of a deformable material that compresses while in contact with the first thermoplastic component, wherein the at least one first plate, the at least one second plate, the two or plungers, and the two or more pressurizers are non-conductive.
   C2: The thermoplastic welding assembly of clause C1, further comprising an outer structural shell supporting the at least one first plate and the at least one second plate.
   C3: The thermoplastic welding assembly of any of clauses C1 to C2, further comprising a press actuator for moving the at least one first plate and the at least one second plate together to hold the first thermoplastic component in contact with the second thermoplastic component for the thermoplastic weld.
   C4: The thermoplastic welding assembly of any of clauses C1 to C3, wherein the at least one second plate is stationary, and the at least one first plate is movable toward and away from the at least one second plate.
   C4: The thermoplastic welding assembly of clause C3, wherein the at least one first plate is stationary and the at least one second plate is movable toward and away from the at least one first plate.
   C5: The thermoplastic welding assembly of clause C4, further comprising a welding probe that fits within the slot of the at least one first plate to perform the thermoplastic weld.
   C6: The thermoplastic welding assembly of clause C5, wherein the welding probe comprises an induction coil operable to perform the thermoplastic weld through induction welding.
   C7: The thermoplastic welding assembly of any of clauses C1 to C6, wherein the two or more pressurizers and the at least one plunger are made of a phenolic-based temperature-resistant material.
   C8: The thermoplastic welding assembly of any of clauses C1 to C7, wherein at least one of the two or more pressurizers is made of rubber.
   C9: The thermoplastic welding assembly of any of clauses C1 to C9, wherein the at least one plunger is made of a rigid, non-deformable material.
Clause set D:
   D1: A method for welding thermoplastic components in a thermoplastic welding assembly comprising a press that includes a first plate with a slot for a welding probe and a second plate having cavities for plungers to drive compressible pressurizers into contact with the thermoplastic components, the method comprising:
      receiving a signal to close the press on the thermoplastic components;
      in response to the signal, closing the press to hold the thermoplastic components for welding; moving the plungers in the second plate through the cavities to drive the compressible pressurizers into contact with the thermoplastic components and apply additional pressure for holding the thermoplastic components during welding;
      initiating welding of the thermoplastic components with the welding probe;
      maintaining the additional pressure on the thermoplastic components after the welding has stopped for a cooldown period;
      withdrawing the compressible pressurizers from contact with the thermoplastic components after the cooldown period; and
      opening the press to enable removal of the thermoplastic components.
   D2: The method of clause D1, wherein the cooldown period is preset based on a type of part of the thermoplastic components.
   D3: The method of any of clauses D1 to D2, wherein the cooldown period is manually set.
   D4: A portion of an aircraft assembled according to the method of any of clauses D1 to D3.
Clause set E:
   E1: A method for welding thermoplastic components together, the method comprising:
      driving compressible pressurizers into contact with the thermoplastic components to control pressure on the thermoplastic components during welding;
      actuating a welding probe to generate heat in the thermoplastic components to facilitate the welding; and
      applying a heat sink to the thermoplastic components to control the heat generated by the welding probe.
   E2: The method of clause E1, further comprising forming a welding joint between the thermoplastic components, and wherein applying a heat sink to the thermoplastic components to control the heat generated by the welding probe comprises applying a heat sink shaped wider than the welding joint to spread the heat generated by the welding probe over an entire width of the welding joint.

Further illustrative and non-exclusive examples according to the disclosure are described in the following paragraphs:

In an example according to the present disclosure, a thermoplastic welding assembly (106) for welding thermoplastic components (302-304), comprises: a first plate (204) forming a slot (116); a second plate (206) with one or more plunger cavities (314a-n); a heat sink (318) positioned within the slot (116) of the first plate (204); at least one plunger (316a-n) positioned within the one or more plunger cavities (314a-n) of the second plate (206) and movable toward the thermoplastic components (302-304) being welded; and at least one pressurizer (502a-n) affixed to the at least one plunger (316a-n) for holding the thermoplastic components (302-304) together during welding, wherein the at least one pressurizer is made of a deformable material that compresses when pushed into contact the thermoplastic components.

Optionally, in the thermoplastic welding assembly of the earlier paragraph, the at least one plunger comprises two or more plungers.

Optionally, in the thermoplastic welding assembly of any of the earlier paragraphs, the at least one pressurizer comprises two or more pressurizers.

Optionally, in the thermoplastic welding assembly of any of the earlier paragraphs, the at least one pressurizer is reciprocally shaped to an outer contour of at least one of the thermoplastic components.

Optionally, the thermoplastic welding assembly of any of the earlier paragraphs, further comprises: at least one bladder configured to move the at least one plunger through pneumatic force to drive the at least one pressurizer into contact with at least one of the thermoplastic components; and a plunger actuator configured to supply the pneumatic force to move the at least one plunger.

Optionally, the thermoplastic welding assembly of any of the earlier paragraphs, further comprises a hydraulic actuated metallic frame.

Optionally, the thermoplastic welding assembly of any of the earlier paragraphs, further comprises one or more electrical controls for selectively activating the plunger actuator and control movement of the at least one plunger to drive the at least one pressurizer into contact with said at least one of the thermoplastic components.

Optionally, the thermoplastic welding assembly of any of the earlier paragraphs, further comprises a plunger actuator configured to supply mechanical force to move the at least one pressurizer into contact with at least one of the thermoplastic components.

Optionally, the thermoplastic welding assembly of any of the earlier paragraphs, further comprises: a welding probe, wherein the heat sink is shaped wider than a welding joint created by said welding.

Optionally, the thermoplastic welding assembly of any of the earlier paragraphs, further comprises: a welding probe, wherein the heat sink is positioned between the thermoplastic components and a welding probe.

Optionally, in the thermoplastic welding assembly of any of the earlier paragraphs, the first plate comprises a plurality of tooling inserts that are removable from an upper outer press shell of the first plate.

Optionally, in the thermoplastic welding assembly of any of the earlier paragraphs, the second plate comprises a plurality of tooling inserts that are removable from a lower outer press shell of the second plate.

Optionally, in the thermoplastic welding assembly of any of the earlier paragraphs, the at least one plunger comprises two or more plungers located in separate of the one or more plunger cavities.

Optionally, in the thermoplastic welding assembly of any of the earlier paragraphs, one of the at least one plunger comprises separate plunger parts that are assembled together to fit within the one or more plunger cavities.

Optionally, in the thermoplastic welding assembly of any of the earlier paragraphs, the thermoplastic components comprise a stringer and a skin.

Optionally, in the thermoplastic welding assembly of any of the earlier paragraphs, the stringer and the skin are collectively an airplane part.

Optionally, in the thermoplastic welding assembly of any of the earlier paragraphs, the at least one pressurizer is configurable to accommodate variations in thickness.

In another example according to the present disclosure, an apparatus for welding thermoplastic components, comprises: a welding probe; a press comprising: a first plate forming a slot for receiving the welding probe, and a second plate with one or more plunger cavities; and a heat sink positioned within the slot of the first plate, at least one plunger positioned within the one or more plunger cavities of the second plate and movable toward the thermoplastic components, and at least one pressurizer affixed to the at least one plunger for holding the thermoplastic components together during welding, wherein the at least one pressurizer is made of a deformable material that compresses when pushed into contact the thermoplastic components.

Optionally, in the apparatus of the previous paragraph, the at least one plunger comprises two or more plungers.

Optionally, in the apparatus of any of the earlier paragraphs, the at least one pressurizer comprises two or more pressurizers.

Optionally, in the apparatus of any of the earlier paragraphs, the at least one pressurizer is reciprocally shaped to an outer contour of at least one of the thermoplastic components.

Optionally, the apparatus of any of the earlier paragraphs further comprises: at least one bladder configured to move the at least one plunger through pneumatic force to drive the at least one pressurizer into contact with the thermoplastic components; and a plunger actuator configured to supply the pneumatic force to move the at least one plunger.

Optionally, in the apparatus of any of the earlier paragraphs, the press is a hydraulic press.

Optionally, the apparatus of any of the earlier paragraphs further comprises one or more electrical controls for selectively activating the plunger actuator and control movement of the at least one plunger to drive the at least one pressurizer into contact with the thermoplastic components.

Optionally, the apparatus of any of the earlier paragraphs further comprises a plunger actuator configured to supply mechanical force to move the at least one pressurizer into contact with the thermoplastic components.

Optionally, in the apparatus of any of the earlier paragraphs, the heat sink is shaped wider than the welding probe.

Optionally, in the apparatus of any of the earlier paragraphs, the heat sink is positioned between the thermoplastic components and the welding probe.

Optionally, in the apparatus of any of the earlier paragraphs, the first plate comprises a plurality of tooling inserts that are removable from an upper outer press shell of the first plate.

Optionally, in the apparatus of any of the earlier paragraphs, the second plate comprises a plurality of tooling inserts that are removable from a lower outer press shell of the second plate.

Optionally, in the apparatus of any of the earlier paragraphs, the at least one plunger comprises two or more plungers located in separate of the one or more plunger cavities.

Optionally, in the apparatus of any of the earlier paragraphs, one of the at least one plunger comprises separate plunger parts that are assembled together to fit within the one or more plunger cavities.

Optionally, in the apparatus of any of the earlier paragraphs, the thermoplastic components comprise a stringer and a skin.

Optionally, in the apparatus of any of the earlier paragraphs, the stringer and the skin are collectively an airplane part.

Optionally, in the apparatus of any of the earlier paragraphs, the stringer and the skin collectively form an automotive part.

In another example according to the present disclosure, a thermoplastic welding assembly for joining a first component to a second component using thermoplastic welding, comprises: at least one first plate with a slot for receiving a welding probe capable of performing a thermoplastic weld; at least one second plate with plunger cavities; two or more plungers positioned within the plunger cavities, the two or more plungers being selectively movable toward the first component; and two or more pressurizers affixed to the two or more plungers in the plunger cavities for use force supplied by the two or more plungers to hold the first component and the second component together for the thermoplastic weld, wherein the two or more pressurizers are made of a deformable material that compresses while in contact with the first component, wherein the at least one first plate, the at least one second plate), the two or plungers, and the two or more pressurizers are non-conductive.

Optionally, the thermoplastic welding assembly of the previous paragraph further comprises an outer structural box supporting the at least one first plate and the at least one second plate.

Optionally, the thermoplastic welding assembly of any of the earlier paragraphs further comprises a press actuator for moving the at least one first plate and the at least one second plate together to hold the first component in contact with the second component for the thermoplastic weld.

Optionally, in the thermoplastic welding assembly of any of the earlier paragraphs, the at least one second plate is stationary, and the at least one first plate is movable toward and away from the at least one second plate.

Optionally, in the thermoplastic welding assembly of any of the earlier paragraphs, the at least one first plate is stationary and the at least one second plate is movable toward and away from the at least one first plate.

Optionally, the thermoplastic welding assembly of any of the earlier paragraphs further comprises a welding probe that fits within the slot of the at least one first plate to perform the thermoplastic weld.

Optionally, in the thermoplastic welding assembly of any of the earlier paragraphs, the welding probe comprises an induction coil operable to perform the thermoplastic weld through induction welding.

Optionally, in the thermoplastic welding assembly of any of the earlier paragraphs, the two or more pressurizers and the at least one plunger are made of a phenolic-based temperature-resistant material.

Optionally, in the thermoplastic welding assembly of any of the earlier paragraphs, the at least one pressurizer is made of rubber.

Optionally, in the thermoplastic welding assembly of any of the earlier paragraphs, the at least one plunger is made of a rigid, non-deformable material.

In another example according to the present disclosure, a method for welding thermoplastic components in a thermoplastic welding assembly comprising a press that includes a first plate with a slot for a welding probe and a second plate having cavities for plungers to drive compressible pressurizers into contact with the thermoplastic components, the method comprises: receiving a signal to close the press on the thermoplastic components; in response to the signal, closing the press to hold the thermoplastic components for welding; moving the plungers in the second plate through the cavities to drive the compressible pressurizers into contact with the thermoplastic components and apply additional pressure for holding the thermoplastic components during welding; initiating welding of the thermoplastic components with the welding probe; maintaining the additional pressure on the thermoplastic components after the welding has stopped for a cooldown period; withdrawing the compressible pressurizers from contact with the thermoplastic components after the cooldown period; and opening the press to enable removal of the thermoplastic components.

Optionally, in the method of the previous paragraph, the cooldown period is preset based on a type of part of the thermoplastic components.

Optionally, in the method of any of the earlier paragraphs, the cooldown period is manually set.

Optionally, a portion of an aircraft assembled according to the method of one of the earlier paragraphs.

In another example according to the present disclosure, a method for welding thermoplastic components together, the method comprises: driving compressible pressurizers into contact with the thermoplastic components to control pressure on the thermoplastic components during welding; actuating a welding probe to generate heat in the thermoplastic components to facilitate the welding; and applying a heat sink to the thermoplastic components to control the heat generated by the welding probe.

Optionally, the method of the earlier paragraph further comprises forming a welding joint between the thermoplastic components, and wherein applying a heat sink to the thermoplastic components to control the heat generated by the welding probe comprises applying a heat sink shaped wider than the welding joint to spread the heat generated by the welding probe over an entire width of the welding joint.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

It will be understood that the benefits and advantages described above may relate to one implementation or may relate to several implementations. The implementations are not limited to those that solve any or all of the stated problems or those that have any or all of the stated benefits and advantages. It will further be understood that reference to 'an' item refers to one or more of those items.

The term "comprising" is used in this disclosure to mean including the feature(s) or act(s) followed thereafter, without excluding the presence of one or more additional features or acts. In some examples, the operations illustrated in the figures may be implemented as software instructions encoded on a computer readable medium, in hardware programmed or designed to perform the operations, or both. For example, aspects of the disclosure may be implemented as an ASIC, SoC, or other circuitry including a plurality of interconnected, electrically conductive elements.

The order of execution or performance of the operations in examples of the disclosure illustrated and described herein is not essential, unless otherwise specified. That is, the operations may be performed in any order, unless otherwise specified, and examples of the disclosure may include additional or fewer operations than those disclosed herein. For example, it is contemplated that executing or performing a particular operation before, contemporaneously with, or after another operation is within the scope of aspects of the disclosure.

When introducing elements of aspects of the disclosure or the examples thereof, the articles "a," "an," "the," and "said" are intended to mean that there are one or more of the elements. The terms "comprising," "including," and "having" are intended to be inclusive and mean that there may be additional elements other than the listed elements. The term "exemplary" is intended to mean "an example of." The phrase "one or more of the following: A, B, and C" means "at least one of A and/or at least one of B and/or at least one of C."

Having described aspects of the disclosure in detail, it will be apparent that modifications and variations are possible without departing from the scope of aspects of the disclosure as defined in the appended claims. As various changes could be made in the above constructions, products, and methods without departing from the scope of aspects of the disclosure, it is intended that all matter contained in the above description and shown in the accompanying drawings shall be interpreted as illustrative and not in a limiting sense.

It is to be understood that the above description is intended to be illustrative, and not restrictive. As an illustration, the above-described implementations (and/or aspects thereof) are usable in combination with each other. In addition, many modifications are practicable to adapt a particular situation or material to the teachings of the various implementations of the disclosure without departing from their scope. While the dimensions and types of materials described herein are intended to define the parameters of the various implementations of the disclosure, the implementations are by no means limiting and are exemplary implementations. Many other implementations will be apparent to those of ordinary skill in the art upon reviewing the above description. The scope of the various implementations of the disclosure should, therefore, be determined with reference to the appended claims, along with the full scope of equivalents to which such claims are entitled. In the appended claims, the terms "including" and "in which" are used as the plain-English equivalents of the respective terms "comprising" and "wherein." Moreover, the terms "first," "second," and "third," etc. are used merely as labels, and are not intended to impose numerical requirements on their objects. Further, the limitations of the following claims are not written in means-plus-function format and are not intended to be interpreted based on 35 U.S.C. § 112(f), unless and until such claim limitations expressly use the phrase "means for" followed by a statement of function void of further structure.

This written description uses examples to disclose the various implementations of the disclosure, including the best mode, and also to enable any person of ordinary skill in the art to practice the various implementations of the disclosure, including making and using any devices or systems and performing any incorporated methods. The patentable scope of the various implementations of the disclosure is defined by the claims, and includes other examples that occur to those persons of ordinary skill in the art. Such other examples are intended to be within the scope of the claims if the examples have structural elements that do not differ from the literal language of the claims, or if the examples include equivalent structural elements with insubstantial differences from the literal language of the claims. Although the present disclosure has been described with reference to various implementations, various changes and modifications can be made without departing from the scope of the present disclosure.

## Claims

1. A thermoplastic welding assembly (106) for welding thermoplastic components (302-304), comprising:
a first plate (204) forming a slot (116);
a second plate (206) with one or more plunger cavities (314a-n);
a heat sink (318) positioned within the slot (116) of the first plate (204);
at least one plunger (316a-n) positioned within the one or more plunger cavities (314a-n) of the second plate (206) and movable toward the thermoplastic components (302-304) being welded; and
at least one pressurizer (502a-n) affixed to the at least one plunger (316a-n) for holding the thermoplastic components (302-304) together during welding, wherein the at least one pressurizer is made of a deformable material that compresses when pushed into contact the thermoplastic components.

2. The thermoplastic welding assembly of claim 1, wherein the at least one plunger (316a-n) comprises two or more plungers (316a-n).

3. The thermoplastic welding assembly of claims 1 or 2, wherein the at least one pressurizer comprises two or more pressurizers (502a-n).

4. The thermoplastic welding assembly of any of claims 1-3, wherein the at least one pressurizer (502a-n) is reciprocally shaped to an outer contour of at least one of the thermoplastic components (302-304).

5. The thermoplastic welding assembly of any of claims 1-4, further comprising:
at least one bladder (314a-n) configured to move the at least one plunger (316a-n) through pneumatic force to drive the at least one pressurizer (502a-n) into contact with at least one of the thermoplastic components (302-304); and
a plunger actuator (222) configured to supply the pneumatic force to move the at least one plunger (316a-n).

6. The thermoplastic welding assembly of any of claims 1-5, further comprising a hydraulic actuated metallic frame (306, 312).

7. The thermoplastic welding assembly of claim 5 or 6, further comprising one or more electrical controls (602) for selectively activating the plunger actuator (222) and control movement of the at least one plunger (316a-n) to drive the at least one pressurizer (502a-n) into contact with said at least one of the thermoplastic components (302-304).

8. The thermoplastic welding assembly of any of claims 1-7, further comprising a plunger actuator (222) configured to supply mechanical force to move the at least one pressurizer (502a-n) into contact with at least one of the thermoplastic components (302-304).

9. The thermoplastic welding assembly of any of claims 1-8, further comprising:
a welding probe (114),
wherein the heat sink (318) is shaped wider than a welding joint created by said welding.

10. The thermoplastic welding assembly of any of claims 1-9, further comprising:
a welding probe (114),
wherein the heat sink (318) is positioned between the thermoplastic components and a welding probe.

11. The thermoplastic welding assembly of any of claims 1-10, wherein the first plate (204) comprises a plurality of tooling inserts (308) that are removable from an upper outer press shell (306) of the first plate (302).

12. The thermoplastic welding assembly of any of claims 1-11, wherein the second plate (304) comprises a plurality of tooling inserts (313) that are removable from a lower outer press shell (312) of the second plate (304).

13. The thermoplastic welding assembly of any of claims 1-12, wherein the at least one plunger (316a-n) comprises two or more plungers (316a-n) located in separate of the one or more plunger cavities (314a-n).

14. The thermoplastic welding assembly of any of claims 1-13, wherein one of the at least one plunger (316a-n) comprises separate plunger parts (316a-b) that are assembled together to fit within the one or more plunger cavities (314a-n).

15. The thermoplastic welding assembly of any of claims 1-14, wherein the thermoplastic components comprise a stringer (504) and a skin (304).
